# EUROPÄISCHE PATENTANMELDUNG

(11) **EP 4 759 781 A1**
(43) Veröffentlichungstag der Anmeldung: **17.06.2026**
(21) Anmeldenummer: 24219683.0
(22) Anmeldetag: 13.12.2024
(51) Int. Cl.: C04B 14/10, C09K 3/10, C09K 21/02, E04B 1/94

(54) **ZWEIKOMPONENTEN ZUSAMMENSETZUNG**

(71) Anmelder: Cuylits Holding GmbH, 49593 Bersenbrück (DE)
(72) Erfinder: Die Erfindernennung liegt noch nicht vor
(74) Vertreter: Gille Hrabal Partnerschaftsgesellschaft mbB Patentanwälte

(57) **Zusammenfassung**

Beschreiben wird eine Zweikomponenten-Zusammensetzung. Diese Zusammensetzung enthält eine erste Komponente, umfassend mindestens ein Wasserglas und mit Treibgas versehene Mikrohohlkugeln mit einem mit Treibgas versehenen Kern und einem Polymermaterial als Hülle; und eine zweite Komponente, umfassend ein organisches Lösemittel zum Öffnen dieser Mikrohohlkugeln, wobei die erste Komponente Silikatfasern enthält.

## Beschreibung

Die vorliegende Erfindung betrifft eine Zweikomponenten-Zusammensetzung sowie deren Verwendung zur Erzeugung eines Schaumes. Der ausgehend von der Zweikomponenten-Zusammensetzung erhaltene Schaum kann unter anderem als Brandschutzschaum verwendet werden.

Ein weiterer Gegenstand der vorliegenden Verwendung ist der ausgehend von der Zweikomponenten-Zusammensetzung erhaltene Brandschutzschaum sowie ein Verfahren zur Herstellung von Brandschutzmaterialien ausgehend von der Zweikomponenten-Zusammensetzung.

Aus dem Stand der Technik sind Schaummaterialien bekannt, die im Bereich Brandschutz Anwendung finden.

Bekannt sind Schaumglaskörper aus flüssigem Wasserglas, Füllstoffen und Peroxiden. Die Peroxide zerfallen in dem alkalischen Wasserglas zu Sauerstoff und schäumen dadurch das Gemisch auf. Entsprechende Zusammensetzungen sind in der US 3,095,312 beschrieben. Um den Einsatz der reaktiven Peroxide zu vermeiden, wird alternativ ein Verfahren genutzt, in dem ein saurer Harter eingesetzt wird, welcher das Wasserglas härtet und gleichzeitig ein Gas, wie zum Beispiel CO₂, freisetzt. Durch dieses Gas und den Zusatz von Tensiden wird das Gemisch aufgeschäumt. Der Nachteil dieses Verfahren besteht darin, dass die Gas-freisetzende Reaktion zu einer Erwärmung von bis zu 100 °C führt (US 3850650 A). Ein weiteres Verfahren benötigt kein Aufschäummittel in der Wasserglas-Zusammensetzung. Allein durch die schnelle Erwärmung des enthaltenen Wassers und den daraus entstehenden Gasblasen entsteht ein Schaumglas, wie in der US 6,497,945 B beschrieben.

Die US 8,822,557 B offenbart einen elastischen Schaum aus organischen und anorganischen Teilen. Damit wird ein Mineralschaum mit verbesserten mechanischen Eigenschaften und Wasserresistenz erhalten, welcher ein mineralisches Bindemittel und eine Polymer-Dispersion enthalt.

Die DE 101 41 777 A1 offenbart einen unbrennbaren, anorganischen Schaum, welcher feuchtigkeitsbeständig und elastisch ist. Der Schaum basiert auf einer Mischung aus einem Alkalimetallsilikat, einem Alkalimetallaluminat und einem Treibmittel. Das Verfahren zur Herstellung des anorganischen Schaums erfordert eine Wärmezufuhr.

Die DE 32 44 523 A1 offenbart die Herstellung eines Ortschaums aus Wasserglas und einer Härterlösung ohne Wärmezufuhr. Die beiden Bestandteile Wasserglas und Härterlösung befinden sich in zwei Druckbehältern; die Schaumerzeugung erfolgt unter anderem durch ein unter erhöhtem Druck bei 0 bis 50 °C flüssiges Treibgas. Der Ortschaum eignet sich zur Herstellung von zum Beispiel Füll- oder Isolationsmaterial im Bauwesen, das nicht brennbar ist.

Als Härter kann auch ein Carbonsäure-Ester eingesetzt werden. Die Schaumstoffe sind nach Erhärten in die Baustoffklasse A 2 einzuordnen (DIN 4102).

Die US 5,194,087 ein feuerfestes, wasserfestes und säurebeständiges Bindemittel, das im Wesentlichen aus einer gehärteten Mischung von etwa 10 bis 90 Gew.-% eines Alkalisilikats, etwa 1 bis 40 Gew.-% eines reaktiven Metalloxids von Magnesium oder Titan und etwa 1 bis 70 Gew.-% einer Carbonatverbindung besteht.

EP 2 571 829 offenbart ein Verfahren zur Herstellung von Formkörpern für Brandschutzmaterialien aus Zusammensetzungen bestehend aus mindestens zwei unterschiedlichen Natronwassergläsern spezifischer Viskosität. EP 2 571 829 offenbart weiterhin die gleichzeitige Verwendung von mit Treibgas gefüllten Mikrokapseln zur Aufblähung dieser Zusammensetzung, wobei die Aufblähung unter Energieeinwirkung erfolgt. Die Verwendung von energiesparsameren Methoden zur Gasfreisetzung, sowie der Vorteil der Aufblähung in einem spezifischen Temperaturbereich, werden nicht offenbart.

EP 3 732 147 A offenbart ein Verfahren zur Herstellung eines festen Brandschutzmaterials, insbesondere in der Form einer Brandschutzplatte, wobei zunächst eine erste Zusammensetzung, enthaltend mindestens ein Wasserglas und mit Treibgas versehene Mikrokapseln, bereitgestellt wird, und dann die Mikrokapseln durch die Zugabe von Propylencarbonat in einer zweiten Zusammensetzung aufgebrochen werden. WO 2019/110835 A offenbart eine Kombination, umfassend eine erste Zusammensetzung und eine zweite Zusammensetzung, wobei die erste Zusammensetzung Mikrohohlkugeln und die zweite Zusammensetzung ein Losemittel zum Öffnen dieser Mikrohohlkugeln enthält und die erste Zusammensetzung und/oder die zweite Zusammensetzung ein anorganisches und/oder organisches Bindemittel enthalt, wobei die Mikrohohlkugeln eine Polymerhülle aufweisen und ein Treibmittel enthalten.

Nachteilig an diesen aus dem Stand der Technik bekannten Zusammensetzungen ist, dass die resultierenden Schäume kein zufriedenstellendes Aushärteverhalten mit gleichzeitiger mechanischer Stabilität aufweisen.

Ein weiterer Nachteil der aus dem Stand der Technik bekannten Materialien ist ihr zum Teil hoher Anteil an organischen Verbindungen, der zu einer schlechteren Brandschutzwirkung und Temperaturstabilität führt.

Ein weiterer Nachteil bei Zweikomponenten-Systemen besteht darüber hinaus darin, dass die Gefahr von inhomogenen Verteilungen zwischen den beiden Komponenten möglichst vermieden werden muss, um eine homogene und effiziente Bereitstellung des Schaumes zu ermöglichen.

Schließlich ist der Stand der Technik auch im Hinblick auf das Verhältnis von Gesamtdichte und Stabilität des ausgehärteten Schaumes nachteilig, da in der Regel in diesen Schaumsystemen eine Vielzahl an Hohlräume in den Schaum eingetragen werden.

Ausgehend von diesem Stand der Technik ist es die Aufgabe der vorliegenden Erfindung, eine Zweikomponenten-Zusammensetzung bereitzustellen, welche zu Schaummassen führt, die zumindest einen Nachteil des Stands der Technik überwinden.

Insbesondere soll eine Zweikomponenten-Zusammensetzung zur Erzeugung eines Schaumes zur Verfügung gestellt werden, die eine Schaumbildung ohne äußere Zufuhr von Wärme ermöglicht.

Die unter Verwendung der Schaummassen herstellbaren Baumaterialien, wie Ortsschäume oder Leichtbauplatten, sollen möglichst brandfest sein und/oder eine gute Biegefestigkeit aufweisen. Besonders vorteilhaft ist zudem eine gute Wärmeisolierung der erhaltenen Materialien.

Eine oder mehrere dieser Aufgabe der vorliegenden Erfindung wird durch eine Zweikomponenten-Zusammensetzung gelöst.

Gelöst wird diese Aufgabe durch eine Zweikomponenten-Zusammensetzung, enthaltend eine
(1) erste Komponente, umfassend mindestens ein Wasserglas und mit Treibgas versehene Mikrohohlkugeln mit einem mit Treibgas versehenen Kern und einem Polymermaterial als Hülle, wobei die Mikrokapseln, bezogen auf das Trockengewicht, von mindestens 20 Gewichts-% Treibgas aufweisen; und
(2) zweite Komponente, umfassend ein organisches Lösemittel zum Öffnen dieser Mikrohohlkugeln,
dadurch gekennzeichnet, dass die erste Komponente Glasfasern enthält.

Gelöst wird diese Aufgabe auch durch eine Zweikomponenten-Zusammensetzung, enthaltend eine
(1) erste Komponente, umfassend mindestens ein Wasserglas und mit Treibgas versehene Mikrohohlkugeln mit einem mit Treibgas versehenen Kern und einem Polymermaterial als Hülle, wobei die Mikrokapseln, bezogen auf das Trockengewicht, von mindestens 20 Gewichts-% Treibgas aufweisen; und
(2) zweite Komponente, umfassend ein organisches Lösemittel zum Öffnen dieser Mikrohohlkugeln,
dadurch gekennzeichnet, dass die dass die Zweikomponenten-Zusammensetzung ein Metakaolin enthält.

Im Folgenden werden die Bestandteile der Zweikomponenten-Zusammensetzung näher beschrieben, wobei zunächst auf die erste Komponente eingegangen wird.

### Bestandteile der ersten Komponente

Nicht alle der nachfolgend beschriebenen Bestandteile der ersten Komponente sind zwingende Bestandteile.

### Silikatfasern

Silikatfasern sind eine Gruppe von Fasern, die auf Silikaten basieren - mineralischen Verbindungen, die hauptsächlich aus Silizium (Si) und Sauerstoff (O) bestehen. Silikatfasern können aus natürlichen Silikaten (wie Asbest) oder synthetisch hergestellten Silikatmaterialien (wie Glas- oder Mineralfasern) bestehen.

Es gibt verschiedene Typen von Silikatfasern, die sich aufgrund ihrer chemischen Zusammensetzung, ihrer Herstellungsverfahren und ihrer spezifischen Eigenschaften unterscheiden und gemäß der vorliegenden Erfindung verwendet werden können:
Glasfasern sind eine der bekanntesten Formen von Silikatfasern. Sie bestehen aus amorphem Siliciumdioxid (SiO₂) und anderen Bestandteilen wie Aluminiumoxid (Al₂O₃), Bortrioxid (B₂O₃) und Kalziumoxid (CaO). Glasfasern sind nicht kristallin, was bedeutet, dass sie eine unregelmäßige atomare Struktur haben. Sie sind aufgrund ihrer hohen Festigkeit, Flexibilität und Beständigkeit gegen hohe Temperaturen und Chemikalien weit verbreitet.

Mineralfasern, auch als Steinwolle oder Mineralwolle bekannt, bestehen aus einer Mischung aus Silikatmaterialien, insbesondere basaltischen oder Diabas-Materialien, die bei hohen Temperaturen geschmolzen und dann zu Fasern verarbeitet werden.

Keramikfasern bestehen hauptsächlich aus Siliziumdioxid und anderen Metalloxiden wie Aluminiumoxid (Al₂O₃) oder Magnesiumoxid (MgO) und haben eine kristalline Struktur. Sie sind für Anwendungen geeignet, bei denen hohe Temperaturen und extreme chemische Beständigkeit erforderlich sind.

Die vorgenannten Silikatfasern zeichnen sich durch eine Reihe von außergewöhnlichen physikalischen, chemischen und mechanischen Eigenschaften aus, die sie für die Anwendung in der vorliegenden Erfindung besonders geeignet machen:
So sind Silikatfasern, insbesondere Glas- und Keramikfasern, in der Lage, extrem hohe Temperaturen zu widerstehen, ohne ihre strukturelle Integrität zu verlieren. Glasfasern können Temperaturen von bis zu 1000 °C standhalten, während Keramikfasern noch höheren Temperaturen widerstehen können. Diese Fasern haben darüber hinaus exzellente Wärmeisolierungseigenschaften und sind gegenüber vielen Chemikalien stabil und widerstandsfähig. Sie sind insbesondere beständig gegen Säuren und Basen sowie gegen viele organische Lösungsmittel.

Silikatfasern sind darüber hinaus mechanisch stark und haben eine hohe Zugfestigkeit, was sie für die Herstellung von Verstärkungsfasern in Verbundmaterialien geeignet macht.

Silikatfasern sind in der Regel nicht brennbar und weisen daher in dem erfindungsgemäßen Anwendungsbereich des Brandschutzes Vorteile auf.

In einer ersten Ausgestaltung der vorliegenden Erfindung sind die Silikatfasern in der ersten Komponente in einer Menge von mindestens 0,1 Gew.-%, bevorzugt mindestens 0,2 Gew.-%, weiter bevorzugt mindestens 0,3 Gew.-%, weiter bevorzugt mindestens 0,4 Gew.-%, weiter bevorzugt mindestens 0,5 Gew.-%, jeweils bezogen auf das Gesamtgewicht der ersten Komponente, enthalten.

In einer zweiten Ausgestaltung der vorliegenden Erfindung sind die Silikatfasern in der ersten Komponente in einer Menge von höchstens 10 Gew.-%, bevorzugt höchstens 8 Gew.-%, weiter bevorzugt höchstens 6 Gew.-%, weiter bevorzugt höchstens 4 Gew.-%, weiter bevorzugt höchstens 2 Gew.-%, weiter bevorzugt höchstens 1 Gew.-%, weiter bevorzugt höchstens 0,8 Gew.-%, weiter bevorzugt höchstens 0,7 Gew.-%, jeweils bezogen auf das Gesamtgewicht der ersten Komponente, enthalten.

In einer besonderen Ausgestaltung der vorliegenden Erfindung sind die Silikatfasern in der ersten Komponente in einer Menge von 0,1 bis 10 Gew.-%, bevorzugt 0,1 bis 8 Gew.-%, weiter bevorzugt 0,2 bis 6 Gew.-%, weiter bevorzugt 0,2 bis 4 Ge.-%, weiter bevorzugt 0,3 bis 2 Gew.-%, weiter bevorzugt 0,3 bis 1 Gew.-%, weiter bevorzugt 0,4 bis 0,8 Gew.-%, weiter bevorzugt 0,5 bis 0,7 Gew.-%, jeweils bezogen auf das Gesamtgewicht der ersten Komponente, enthalten.

Durch den Zusatz an Silikatfasern in der ersten Komponente kann der organische Anteil in der erfindungsgemäßen Zweikomponenten-Zusammensetzung verbessert werden, was Vorteile im Hinblick auf die Brandklasse, Temperaturstabilität, der CO₂-Belastung und der Abfallentsorgung mit sich bringt.

Durch Zugabe der Silikatfaser kann die mechanische Stabilität des aus der erfindungsgemäßen Zweikomponenten-Zusammensetzung resultierenden Schaumes verbessert werden.

Im Rahmen der vorliegenden Erfindung hat sich dabei herausgestellt, dass je länger die eingesetzte Silikatfaser ist, desto höher auch die mechanische Stabilität ist. In der Praxis ergeben sich jedoch zwei Probleme beim Einsatz von zu langen Fasern:
In einem Schaum auf Basis der erfindungsgemäßen Zweikomponenten-Zusammensetzung muss in der Anwendungspraxis ein sogenannter Statikmischer auf die üblicherweise verwendete Kartusche, in welcher die ersten und zweite Zusammensetzungen vor dem Mischen aufbewahrt werden, aufgeschraubt werden. Bei dieser Kartusche handelt es sich um ein Kunststoff-Teil mit vielen Windungen, das für eine homogene Verteilung der einzelnen Komponenten sorgen soll. Lange Silikatfasern können sich in diesen Windungen verfangen und sie somit verstopfen.

Darüber hinaus neigen zu lange Silikatfasern in Mischbehältern zurNestbildung". Die Fasern können sich ineinander verschlingen und so inhomogen ansammeln oder im Extremfall verknoten.

Kurze Fasern lassen sich hier besser handhaben und auch in der Produktion verarbeiten.

Daraus resultiert erfindungsgemäß eine mittlere Faserlänge der Silikatfasern von vorzugsweise höchstens 7 mm, bevorzugt höchstens 6 mm, weiter bevorzugt höchstens 5 mm, weiter bevorzugt höchstens 4 mm, weiter bevorzugt höchstens 3,5 mm.

Daraus resultiert erfindungsgemäß ferner eine mittlere Faserlänge der Silikatfasern von vorzugsweise mindestens 0,5 mm, bevorzugt mindestens 1 mm, weiter bevorzugt mindestens 1,5 mm, weiter bevorzugt mindestens 2 mm, weiter bevorzugt mindestens 2,5 mm.

Daraus resultiert erfindungsgemäß ferner eine mittlere Faserlänge der Silikatfasern von vorzugsweise 0,5 bis 7 mm, bevorzugt 1 bis 6 mm, weiter bevorzugt 1,5 bis 5 mm, weiter bevorzugt 2 bis 4 mm, weiter bevorzugt 2,5 bis 3,5 mm.

### Wasserglas

Die erste Komponente der erfindungsgemäßen Zweikomponenten-Zusammensetzung enthält mindestens ein Wasserglas. Dieses Wasserglas fungiert in der erfindungsgemäßen Zweikomponenten-Zusammensetzung und dem daraus resultierenden Schaum als Bindemittel.

Wassergläser sind wasserhaltige, amorphe Siliciumdioxid-Verbindungen, die durch das Auflösen von Siliciumdioxid (SiO₂) in einer alkalischen Lösung entstehen. Diese Materialien sind eine spezielle Form von Silikaten, die in wässrigen Lösungen existieren und eine gelartige, viskose Konsistenz aufweisen. Wassergläser werden auch als flüssige Glasarten oder flüssige Silikate bezeichnet:
Wasserglas besteht hauptsächlich aus Siliciumdioxid (SiO₂), das in alkalischer Lösung, typischerweise mit Natronlauge (NaOH) oder Kalilauge (KOH), gelöst wird. Die chemische Formel für Wasserglas hängt von der Art des Alkalis (Natrium oder Kalium) ab und ist im Allgemeinen:
Natrium-Wasserglas: Na₂SiO₃Na₂SiO₃
Kalium-Wasserglas: K₂SiO₃K₂SiO₃

Es handelt sich um eine lösliche Verbindung, die keine kristalline Struktur wie normales Glas aufweist, sondern eine amorphe (unregelmäßige) Struktur, die typisch für viele Silikate ist. Im Gegensatz zu kristallinem Glas hat Wasserglas keine geordnete Atomanordnung. Es handelt sich um ein amorphes Silikat, das in einer gelartigen Form vorliegt und aufgrund seiner Viskosität und chemischen Zusammensetzung als "flüssiges Glas" bezeichnet wird.

Die physikalischen Eigenschaften von Wasserglas variieren je nach Konzentration der Lösung und der Art des Alkalis, das verwendet wurde. Typische Eigenschaften von Wasserglas umfassen:
Löslichkeit in Wasser (Wasserglas ist in Wasser löslich, und je nach Konzentration der Lösung kann es eine gelartige oder flüssige Konsistenz aufweisen), Viskosität (Wasserglas hat eine hohe Viskosität, die mit der Konzentration des Siliziums und der Lauge steigt), alkalisch (Wasserglas hat einen hohen pH-Wert und ist stark alkalisch (basisch), was es in vielen industriellen Anwendungen nützlich macht), Hitzebeständigkeit (Wasserglas ist in der Lage, hohe Temperaturen zu widerstehen, was es für Anwendungen in der Brandbekämpfung und als Isoliermaterial geeignet macht), und geringe Festigkeit im Vergleich zu kristallinem Glas (da Wasserglas keine feste kristalline Struktur besitzt, ist seine Festigkeit begrenzt; es verhält sich eher wie eine gelartige Substanz).

Die Einsatzgebiete des Wasserglases sind vielseitig. Es kann als Flammenschutzmittel eingesetzt werden, da es hochtemperaturbeständig und feuerfest ist. Wasserglas eignet sich auch, um Oberflächen abzudichten. Deswegen kann die erfindungsgemäße Zweikomponenten-Zusammensetzung sowie die daraus resultierenden Schäume vorzugsweise als Oberflächenbeschichtung im Bautenschutz Verwendung finden. Besonders bevorzugt ist die Herstellung von brandfesten Leichtbauplatten.

Erfindungsgemäß als Bindemittel geeignete Wassergläser sind Natrium- oder Kaliumsilikat (Natrium- oder Kalium-Wasserglas), insbesondere mit einem Feststoffgehalt von 25 bis 55 %.

Erfindungsgemäß als Bindemittel bevorzugte Wassergläser sind Natriumsilikat (Natriumwasserglas), insbesondere mit einem Feststoffgehalt von 25 bis 55 %.

Erfindungsgemäß ist insbesondere bevorzugt, wenn die erste Komponente und die erfindungsgemäße Zweikomponenten-Zusammensetzung keine Kaliumwassergläser enthalten. Kaliumwassergläser können in der Praxis zwar die Stabilität des ausgehärteten Schaumes im festen Zustand erhöhen, jedoch verringern sie auch die "Klebkraft" gegenüber anderen Oberflächen, was ihre Verwendung in der erfindungsgemäßen Zweikomponenten-Zusammensetzung nachteilig gestaltet.

Im Rahmen der vorliegenden Erfindung kann es von Vorteil sein, wenn die erste Komponente der erfindungsgemäßen Zweikomponenten-Zusammensetzung mindestens zwei unterschiedliche Wassergläser, insbesondere zwei unterschiedliche Natriumwassergläser, enthält.

Natronwassergläser unterscheiden sich durch einen unterschiedlichen Feststoffgehalt (Natriumsilikat) und auch in ihrer chemischen Feinstruktur (Orthosilikat, Disilikat, Trisilikat, ...). In der Praxis äußern sich diese unterschiedlichen Natriumwassergläser durch ein unterschiedliches Aushärteverhalten.

Daher ist es im Rahmen der vorliegenden Erfindung insbesondere von Vorteil, wenn in der ersten Komponente der erfindungsgemäßen Zweikomponenten-Zusammensetzung ein erstes Natriumwasserglas verwendet wird, welches zu einer schnelleren Aushärtung, gleichzeitig aber auch zu einer etwas verringerten mechanischen Stabilität führt.

Diese erste Natriumwasserglas wird dann erfindungsgemäß vorzugsweise zusätzlich mit mindestens einem zweiten Natriumwasserglas verwendet, welches im noch feuchten Zustand fließend ist.

Durch geeignete Anpassung der Wasserglas-Anteile kann ein Optimum der unterschiedlichen Eigenschaften eingestellt werden.

Das erste Natriumwasserglas ist in der ersten Komponente vorzugsweise in einer Mange von mindestens 20 Gew.-%, bevorzugt mindestens 25 Gew.-%, weiter bevorzugt mindestens 30 Gew.-%, jeweils bezogen auf das Gesamtgewicht der ersten Komponente, enthalten.

Das erste Natriumwasserglas ist in der ersten Komponente vorzugsweise in einer Mange von höchstens 60 Gew.-%, bevorzugt höchstens 55 Gew.-%, weiter bevorzugt höchstens 50 Gew.-%, jeweils bezogen auf das Gesamtgewicht der ersten Komponente, enthalten.

Das erste Natriumwasserglas ist in der ersten Komponente vorzugsweise in einer Mange von 20 bis 60 Gew.-%, bevorzugt 25 bis 55 Gew.-%, weiter bevorzugt 30 bis 50 Gew.-%, enthalten.

Das zweite Natriumwasserglas ist in der ersten Komponente vorzugsweise in einer Mange von mindestens 5 Gew.-%, bevorzugt mindestens 10 Gew.-%, weiter bevorzugt mindestens 15 Gew.-%, jeweils bezogen auf das Gesamtgewicht der ersten Komponente, enthalten.

Das zweite Natriumwasserglas ist in der ersten Komponente vorzugsweise in einer Mange von höchstens 40 Gew.-%, bevorzugt höchstens 35 Gew.-%, weiter bevorzugt höchstens 30 Gew.-%, jeweils bezogen auf das Gesamtgewicht der ersten Komponente, enthalten.

Das zweite Natriumwasserglas ist in der ersten Komponente vorzugsweise in einer Mange von 5 bis 40 Gew.-%, bevorzugt 10 bis 35 Gew.-%, weiter bevorzugt 15 bis 30 Gew.-%, jeweils bezogen auf das Gesamtgewicht der ersten Komponente, enthalten.

Bei Verwendung von lediglich einem Natronwasserglas weist dieses bevorzugt folgende Eigenschaften auf:
(1) Gewichtsverhältnis von SiO₂ zu Na₂O gleich 2,30 bis 3,80, bevorzugt 3,00 bis 3,60, besonders bevorzugt 3,10 bis 3,50
(2) Dichte von 1300 bis 1600 kg/m³, bevorzugt 1300 bis 1500 kg/m³, besonders bevorzugt 1340 bis 1380 kg/m³; und
(3) Wassergehalt von 50 bis 70 Gew.-%, bevorzugt 60 bis 65 Gew.-%, besonders bevorzugt 63,2 bis 64,8 Gew.-%.

Die Verwendung von zwei unterschiedlichen Wassergläsern erweist sich, wie bereits dargestellt, als vorteilhaft.

Bevorzugt enthält die Zusammensetzung daher mindestens zwei unterschiedliche Natronwassergläser, wobei das erste Natronwasserglas eine Viskosität von 1000 bis 2400 mPa * s (20 °C) und das zweite Natronwasserglas eine Viskosität von 75 bis 250 mPa * s (20°C) aufweist.

Das erste Natronwasserglas, welches eine Viskosität von 1000 bis 2400 mPa * s (20 °C) aufweist, weist vorzugsweise mindestens eine weitere der folgenden Eigenschaften auf:
(1) Gewichtsverhältnis von SiO₂ zu Na₂O gleich 2,30 bis 2,60, bevorzugt 2,32 bis 2,56, besonders bevorzugt 2,34 bis 2,54;
(2) Dichte von 1500 bis 1600 kg/m³, bevorzugt 1520 bis 1580 kg/m³, besonders bevorzugt 1540 bis 1565 kg/m³; und
(3) Wassergehalt von 50 bis 55 Gew.-%, bevorzugt 51 bis 54 Gew.-%, besonders bevorzugt 51,9 bis 53,6 Gew.-%.

Die Viskosität dieses Glases beträgt weiter bevorzugt von 1200 bis 2200 mPa * s (20 °C) und besonders bevorzugt von 1400 bis 2000 mPa * s (20 °C).

Das zweite Natronwasserglas weist eine Viskosität von 75 bis 250 mPa * s (20 °C) auf und weist vorzugsweise mindestens eine weitere der folgenden Eigenschaften auf:
(1) Gewichtsverhältnis von SiO₂ zu Na₂O gleich 2,80 bis 3,80, bevorzugt 3,00 bis 3,60, besonders bevorzugt 3,10 bis 3,50;
(2) Dichte von 1300 bis 1500 kg/m³, bevorzugt 1330 bis 1450 kg/m³, besonders bevorzugt 1365 bis 1375 kg/m³; und
(3) Wassergehalt von 55 bis 70 Gew.-%, bevorzugt 60 bis 65 Gew.-%, besonders bevorzugt 63,2 bis 64,6 Gew.-%.

Die Viskosität dieses Glases beträgt weiter bevorzugt von 85 bis 225 mPa * s (20 °C) und besonders bevorzugt von 100 bis 200 mPa * s (20 °C).

Als Natronwassergläser können beispielsweise ein Natronwasserglas mit einem Gewichtsverhältnis 2,3 als erstes Natronwasserglas und ein Natronwasserglas mit einem Gewichtsverhältnis 3,3 als zweites Natronwasserglas verwendet werden. Das Verhältnis der beiden Wassergläser kann dabei bevorzugt zwischen 120-200 Gew.-Teile eines Natronwasserglases mit einem Gewichtsverhältnis von 2,3 zu 10-50 Gewichtsteile eines Natronwasserglases mit einem Gewichtsverhältnis von 3,3 betragen, besonders bevorzugt 140-180 Gew.-Teile zu 15-40 Gew.-Teile, insbesondere bevorzugt 155-165 Gew.-Teile zu 20-30 Gew.-Teile.

In der Zusammensetzung beträgt der Gehalt an Wassergläsern, insbesondere Natronwassergläsern, jeweils bezogen auf die Gesamtmasse der Zusammensetzung, im Allgemeinen 60 bis 98 Gew.-%, bevorzugt 70 bis 97 Gew.-%, weiter bevorzugt 80 bis 96 Gew.-%.

Die Gründe für die Verwendung von Wassergläsern in der erfindungsgemäßen Zweikomponenten-Zusammensetzung sind vielseitig. Es kann als Flammenschutzmittel eingesetzt werden, da es hochtemperaturbeständig und feuerfest ist. Wasserglas eignet sich auch, um Oberflachen abzudichten. Deswegen können die erfindungsgemäßen Schäume vorzugsweise als Oberflächenbeschichtung für Papier, Textilien und im Bautenschutz Verwendung finden. Besonders bevorzugt ist die Herstellung von brandfesten Leichtbauplatten.

### Mikrohohlkugeln

Die Mikrohohlkugeln in der ersten Komponente enthalten ein Treibmittel und weisen eine Polymerhülle auf.

Die Mikrohohlkugeln in der ersten Komponente können in einer Menge von mindestens 1 Gew.-%, bevorzugt mindestens 2 Gew.-%, weiter bevorzugt mindestens 3 Gew.-%, jeweils bezogen auf das Gesamtgewicht der ersten Komponente, enthalten sein.

Die Mikrohohlkugeln sind in der ersten Komponente vorzugsweise in einer Mange von höchstens 10 Gew.-%, bevorzugt höchstens 8 Gew.-%, weiter bevorzugt höchstens 6 Gew.-%, jeweils bezogen auf das Gesamtgewicht der ersten Komponente, enthalten.

Die Mikrohohlkugeln sind in der ersten Komponente vorzugsweise in einer Mange von 1 bis 10 Gew.-%, bevorzugt 2 bis 8 Gew.-%, weiter bevorzugt 3 bis 6 Gew.-%, jeweils bezogen auf das Gesamtgewicht der ersten Komponente, enthalten.

Nach Zugabe der zweiten Komponente wird die Polymerhülle durch ein Lösemittel geöffnet, d.h. die Polymerhülle wird zumindest an- oder aufgelöst, so dass das in der Mikrohohlkugel enthaltene Treibmittel freigesetzt wird. Die Mischung aus erster und zweiter Komponente schäumt damit auf.

Die Mikrohohlkugeln und das Lösemittel liegen daher vor dem Zusammenbringen der beiden Komponenten funktional getrennt vor. Funktional getrennt liegen sie vor, wenn das An- oder Auflösen der Polymerhülle der Mikrohohlkugeln im Wesentlichen erst nach Zusammenbringen der beiden Komponenten erfolgt. Dies wird dadurch gewährleistet, dass die Mikrohohlkugeln und das Lösemittel in unterschiedlichen Komponenten (erste und zweite Komponente) vorliegen oder aber anderweitig voneinander getrennt werden.

Die Mikrohohlkugeln können einen Durchmesser D₅₀ von 5 bis 100 µm, bevorzugt 5 bis 50 µm, noch bevorzugter 10 bis 30 µm, haben. In einer bevorzugten Ausführungsform haben die Mikrohohlkugeln einen Durchmesser D₅₀ von 10 bis 16 µm. Sie weisen eine Polymerhülle auf und enthalten ein Treibmittel. Bevorzugt werden Polymerhüllen mit einem geringen Brennwert. Prinzipiell sind alle Polymerhüllen geeignet, die sich durch ein Lösemittel, bevorzugt ohne Wärmezufuhr, an- bzw. auflösen und somit öffnen lassen.

Die äußere Hülle der Mikrokapseln kann aus einem beliebigen Polymermaterial gebildet werden, solange das Material in der Lage ist, ein entsprechendes Treibgas einzuschließen und sich bei Energiezufuhr ausdehnt bzw. durch Zugabe eines Mittels aufbricht und dieses Treibgas freisetzt.

Die Polymerhülle umfasst ein Polymer, beispielsweise EVA (Ethylen-Vinylacetat-Copolymer); Polyvinylidenchlorid und/oder Acrylnitril; Acrylnitril, Methylmethacrylat und/oder Methacrylnitril, oder Kombinationen davon; bevorzugt Acrylnitril und/oder Methacrylnitril, ganz besonders bevorzugt Acrylnitril und Methacrylnitril.

Das Treibmittel ist bevorzugt ein Treibgas. Die Auswahl des Treibmittels ist unbegrenzt. Bevorzugt werden Treibmittel verwendet, welche nach der Freisetzung ein größeres Volumen einnehmen. Daher können flüssige Treibmittel gegenüber gasförmigen Treibmitteln bevorzugt werden. Vorteilhaft sind Treibmittel, die nicht brennbar und chemisch inert sind.

Beispiele für Treibmittel sind Flüssiggase (bei Raumtemperatur und geringer Kompression, z.B. < 10 bar flüssig) umfassend kurzkettige Kohlenwasserstoffe ausgewählt aus Methan, Ethan, Propan, n-Butan, Isobutan, Pentane, wie n-Pentan, Isopentan und Neopentan, oder Kombinationen davon; Fluorchlorkohlenwasserstoffen, wie Trichlorfluormethan und Dichloriddifluormethan; Dimethylether, Luft, CO₂, Stickstoff, FCKW oder Kombinationen davon.

Beispielsweise kann eine Mischung aus Propan und Butan eingesetzt werden. Ganz besonders bevorzugt ist Isobutan.

Das Treibmittel kann trocken, als Dispersion oder mit unterschiedlichen Trocknungsgraden eingesetzt werden. In einer Anwendungsform liegt die Mikrokapsel als eine Dispersion in einer anderen Anwendungsform liegt die Mikrokapsel getrocknet bzw. mit unterschiedlichen Trocknungsgraden vor. In einer anderen Ausführungsform liegt die Mikrokapsel teilweise getrocknet teilweise in einer Dispersion vor. Als Dispersionsmittel dient insbesondere Wasser.

Die mit Treibgas versehenen Mikrokapseln weisen dabei, jeweils bezogen auf die getrocknete Mikrokapsel, einen Gehalt von 2 bis 35 Gew.-%, bevorzugt 5 bis 30 Gew.-%, weiter bevorzugt 10 bis 30 Gew.-%, weiter bevorzugt 20 bis 30 Gew.-% Treibgas auf. In einer Ausführungsform weisen die getrockneten Mikrokapseln ein Gehalt von mindestens 20 Gew.-% Treibgas auf.

Die mit Treibgas versehenen Mikrokapseln weisen, jeweils bezogen auf die getrockneten Mikrokapseln, im Allgemeinen einen Gehalt an Hüllenmaterial von 50 bis 95 Gew.-%, bevorzugt 50 bis 90 Gew.-%, weiter bevorzugt 60 bis 90 Gew.-%, weiter bevorzugt 60 bis 80 Gew.-%, auf.

Die mit Treibgas versehenen Mikrokapseln können dabei im Kern und / oder im Hüllenmaterial auch noch weitere Inhaltsstoffe, wie beispielsweise Magnesiumhydroxid und/oder Silikate aufweisen.

Die mit Treibgas versehenen Mikrokapseln weisen solche weiteren Inhaltsstoffe, jeweils bezogen auf die getrocknete Mikrokapsel, in einen Gehalt von 0 bis 30 Gew.-%, bevorzugt 0 bis 25 Gew.-%, weiter bevorzugt 0 bis 20 Gew.-%, weiter bevorzugt 1 bis 5 Gew.-%, auf.

Die mit Treibgas versehenen Mikrokapseln können eine beliebige mittlere Partikelgröße aufweisen. Mittlere Partikelgrößen sind beispielsweise 1 bis 90 µm, bevorzugt 1 bis 50 µm , weiter bevorzugt 5 bis 20 µm, weiter bevorzugt 10 bis 16 µm.

Die mit Treibgas versehenen Mikrokapseln weisen, jeweils bezogen auf die getrockneten Mikrokapseln, im Allgemeinen eine Dichte von ≤ 20 kg/m³, bevorzugt von ≤ 17 kg/m³, weiter bevorzugt von ≤ 14 kg/m³, weiter bevorzugt von ≤ 12 kg/m³ auf.

Mikrohohlkugeln werden auch als Mikrosphären bezeichnet. Es können beispielsweise Mikrohohlkugeln des Typs Expancel^{®} der Firma Mouryon verwendet werden, beispielsweise die Expancel^{®}-Mikrohohlkugeln des Typs 461 DU 20, 551 WU 20, 031 30 WUF 40 oder 031 DU 40, besonders bevorzugt des Typs 031 WUF 40 oder 031 DU 40. Weitere Hersteller von möglichen Mikrohohlkugeln sind Kureha oder Matsumoto.

Durch die Verwendung der Mikrohohlkugeln entsteht beim Aufschäumen ein sehr kompakter Mikroschaum mit guten Wärmedämmeigenschaften. Der entstehende Schaum ist dabei nicht so spröde wie ein reiner Wasserglasschaum, welcher ohne Verwendung von entsprechenden Mikrokapseln erzeugt wurde. Auch ein positiver Einfluss auf das Blähvolumen wird bei der Verwendung solcher Mikrokapseln oftmals erreicht.

Erfindungsgemäß beträgt das Masseverhältnis zwischen Wasserglas (bzw. Wassergläsern) und dem mit Treibgas versehenen Mikrokapseln 5,0 bis 35,0, bevorzugt 6,0 bis 25,0, weiter bevorzugt 8,0 bis 24,0.

Im Rahmen der vorliegenden Erfindung wird vorzugsweise auf die Verwendung von anderen Treibmitteln, wie beispielsweise Azoverbindungen, die einerseits teuer und andererseits in Ihrer Handhabung problematisch und ökologisch bedenklich sind, verzichtet. Auch auf die Verwendung von Blähgraphit kann im Rahmen der vorliegenden Erfindung verzichtet werden.

In einer Ausführungsform ist die Zusammensetzung frei von Blähgraphit. In einer weiteren Ausführungsform ist die Zusammensetzung frei von üblichen Blähmitteln wie Trianzinderivaten. In einer bevorzugten Ausführungsform ist die Zusammensetzung frei von Blähgraphit und Triazinderivaten.

### Bindemittel

Neben dem vorstehend bezeichneten Wasserglas / den vorstehend bezeichneten Wassergläsern kann die erste Komponente der erfindungsgemäßen Zweikomponenten-Zusammensetzung mindestens ein weiteres Bindemittel enthalten. Dabei kann es sich um organische oder anorganische Bindemittel handeln, wobei anorganische Bindemittel von Vorteil sind, um den organischen Anteil in der erfindungsgemäßen Zweikomponenten-Zusammensetzung gering zu halten.

Das Bindemittel kann zu einer chemischen Erhärtung und/oder Vernetzung des resultierenden Schaums führen.

Die organischen und/oder anorganischen Bindemittel können durch physikalische oder chemische Vorgänge erhärten oder vernetzen. Das Bindemittel ist daher vorzugsweise erhärtbar oder vernetzbar. Bei der physikalischen Erhärtung ist das Bindemittel beispielsweise in einem Lösemittel suspendiert. Die Erhärtung erfolgt dann beispielsweise durch die Verdunstung bzw. Trocknung des Lösemittels. Beispiele sind Polyolefine, Vinylpolymere (z.B. Polyvinylacetat, Polyvinylalkohol), Styrol-Butadien-Copolymere und Polyacrylate (Acrylharze). Acrylharze basieren beispielsweise auf Polymerisaten oder Copolymerisaten der Acrylsaure, Methacrylsaure und deren Estern. Sie werden beispielsweise mit anderen ungesättigten Monomeren, wie Styrol oder Acrylnitril copolymerisiert.

Weitere mögliche Bindemittel sind SBR-Latices, Naturlatex, Neoprenlatex, Zement oder Gips.

Als mögliche Zementarten kommen beispielsweise in Betracht:
Die europäische Norm DIN EN 197-1 unterscheidet 27 sogenannte Normalzemente, die nach ihren Hauptbestandteilen in fünf Kategorien gegliedert werden. Dies sind:
- CEM I: Portlandzemente
- CEM II: Portlandkompositzemente
- CEM III: Hochofenzemente
- CEM IV: Puzzolanzemente
- CEM V: Kompositzemente

Die Hauptzementarten untergliedern sich entsprechend ihrer Hauptbestandteile in die Zementarten nach DIN EN 197-1 sowie Sonderzemente VLH nach DIN EN 14216:
- Portlandzement CEM I
- Portlandhuttenzement CEM II/-S
- Portlandsilicastaubzement CEM II/-D
- Portlandpuzzolanzement CEM II/-P und CEM II/-Q
- Portlandflugaschezement CEM II/-V und CEM II/-W
- Portlandschieferzement CEM II/-T
- Portlandkalksteinzement CEM II/-L und CEM II/-LL
- Portlandkompositzement CEM II/-M
- Hochofenzement CEM III / VLH III
- Puzzolanzement CEM IV / VLH IV
- Kompositzement CEM V / VLH V

Bevorzugt wird Portlandzement eingesetzt, es können aber auch andere Zementarten eingesetzt werden. Der Fachmann kann je nach Anwendungsbereich eine passende Zementart auswählen.

Als Gipsarten kommen beispielsweise in Betracht:
- Stuckgips
- Putzgips
- Mortelgips
- Haftgips
- Maschinengipsputz
- Fugengips
- Spachtelgips
- Estrichgips
- Fertigputzgips
- Polymergips

Bevorzugt wird Haftgips eingesetzt, besonders bevorzugt Rotband.

In einer Ausführungsform ist das anorganische und/oder organische Bindemittel ein Kunststoff und liegt als Dispersion vor. Bei den Kunststoff-Dispersionen kommen alle vorgenannten Kunststoffe in Betracht, insbesondere Styrol-Butadien-Copolymere (insbesondere Styrol-Butadien-Acrylat), Acrylatdispersionen, Polyvinylacetat-Dispersionen, SBR-Latices, Naturlatex, Neoprenlatex, Polyurethan-Dispersionen oder Epoxidharz-Dispersionen. Besonders bevorzugt sind Kunststoff-Dispersionen, die alkaliresistent oder zementvertraglich sind. Schaume mit einer Kunststoff-Dispersion zeigen eine hohe Elastizität und eine geringe Dichte. Dies gilt bereits für den Einsatz der Kunststoff-Dispersion zusätzlich zu einem (anderen) Bindemittel, es gilt jedoch auch für den Fall, dass die Kunststoff-Dispersion als Bindemittel eingesetzt wird.

Möglich sind auch flüssige Kunststoffe in nicht wässerigen Systemen, beispielsweise Silikonharz- oder Polyurethan-Systeme in flüssiger Form. Bevorzugt wird diesen ein Härter zugesetzt, um die Schaumstruktur zu fixieren.

Die chemische Erhärtung oder Vernetzung kann die Zugabe eines Härters, z.B. eines Carbonsäure-Esters, eines Vernetzungsmittels (z.B. Schwefel, Peroxide oder Metalloxide bei der Vulkanisation von Kautschuk), eines Katalysators (z.B. Säure oder Sikkative) oder die Zufuhr von Wärme oder UV-Strahlung erfordern. Die chemische Erhärtung, insbesondere die Erhärtung von Zement oder Gips, kann die Zugabe von einem Erstarrungsbeschleuniger erfordern. Beispiele für Erstarrungsbeschleuniger für Zement sind Calciumchlorid; alkalische Carbonate, wie Natriumcarbonat, Kaliumcarbonat, Calciumcarbonat; Aluminate wie Tricalciumaluminat; Calciumammoniumnitrat; Calciumnitrat oder basische Ammoniumsalze.

Beispiele für Erstarrungsbeschleuniger für Gips sind Calciumsulfatdihydrat (bevorzugt feingemahlen) oder Kaliumsulfat.

Eine physikalische Erhärtung ist ebenfalls denkbar, beispielsweise durch Entzug von Wasser. Dafür kommen beispielsweise Trocknungsmittel oder "Superabsorber" in Betracht. Durch den Entzug des Wassers ist es möglich, den Schaum schnell zu stabilisieren und das Zusammenfallen zu verhindern. Besonders geeignet ist gebrannter Kalk, da dieser zusätzlich zum Binden des Wassers eine große Menge an Warme während seiner Reaktion bereitstellt. Die freigesetzte Warme in Kombination mit der Bindung des Wassers führt zu einem beschleunigten Abbinden und zur Stabilisierung des Schaumes.

Wenn die Bindemittel wie zum Beispiel Kunststoff-Dispersionen, Zement oder Gips nicht direkt mit dem Lösemittel, zum Beispiel mit 4-Methyl-1,3-dioxolan-2-on, reagieren können, können Härter eingesetzt werden, um den Schaum zu harten und zu stabilisieren.

Besonders bevorzugte Bindemittel sind Kaoline.

### Bestandteile der zweiten Komponente

Nicht alle der nachfolgend beschriebenen Bestandteile der zweiten Komponente sind zwingende Bestandteile.

### Lösemittel

Die zweite Komponente umfasst ein Lösemittel. Das Lösemittel dient dazu, die Polymerhülle der Mikrohohlkugeln zu öffnen. Dazu wird diese zumindest an- oder aufgelöst. Daher ist erfindungsgemäß jedes Lösemittel geeignet, das die Polymerhülle der verwendeten Mikrohohlkugeln an- oder auflösen kann.

Darüber hinaus wird das Lösemittel vorzugsweise so ausgewählt, dass es gleichzeitig die Kristallisation des Wasserglases initiiert.

Erfindungsgemäß einsetzbare Lösemittel sind vorzugsweise ausgewählt aus der Gruppe, bestehend aus polare Lösemittel wie Aceton, Nitromethan oder Dimethylsulfoxid oder organische Carbonsäure-Ester (R₁-O-C(=O)-O-R₂ mit R₁, R₂ = Alkyl-, Allyl- und/oder Arylreste) oder eine Kombination davon; bevorzugt ein Carbonsäure-Ester. Der Carbonsäure-Ester kann aus der folgenden Gruppe ausgewählt sein Dimethoxyameisensäureanhydrid, 1,3-Dioxolan-2-on, 4-Methyl-1,3-dioxolan-2-on, 4-Hydroxymethyl-1,3-dioxolan-2-on oder Kombinationen davon; und ist bevorzugt 1,3-Dioxolan-2-on oder 4-Methyl-1,3-dioxolan-2-on oder eine Kombination davon.

Besonders geeignet, die Polymerhülle der Mikrohohlkugeln schnell zu öffnen, sind bei einer Polymerhülle mit Acrylnitril und/oder Methacrylnitril polare Losemittel mit hohem Dipolmoment. So reagiert Aceton (£=20) zwar mit der Polymerhülle, jedoch langsamer als 4-Methyl-1,3-dioxolan-2-on (£= 65). Besonders bevorzugt sind daher, insbesondere bei einer Polymerhülle mit Acrylnitril und/oder Methacrylnitril, 1,3-Dioxolan-2-on und 4-Methyl-1,3-dioxolan-2-on. Beide Losemittel können die Polymerhülle schnell öffnen.

Ganz besonders bevorzugt ist 4-Methyl-1,3-dioxolan-2-on als Lösemittel in der zweiten Komponente.

### Wasser

Die zweite Komponente der erfindungsgemäßen Zweikomponenten-Zusammensetzung umfasst Wasser. Dadurch wird das Volumen der zweiten Komponente erhöht, so dass das Mischungsverhältnis mit der ersten Komponente vorteilhaft eingestellt werden kann.

Wasser kann auch zusätzlich oder alternativ in der ersten Komponente enthalten sein.

In einer bevorzugten Ausführungsform ist die erste Komponente allerdings wasserfrei.

### Bindemittel

Die zweite Komponente kann zusätzlich ein Bindemittel enthalten.

Bei dem Bindemittel handelt es sich insbesondere um ein Metakaolin. Metakaolin wird aus kaolinitischem Ton hergestellt und zählt zu den künstlichen Puzzolanen (Kurzzeichen für Zement-Hauptbestandteile nach DIN EN 197-1: Q).

Kaolin (auch: Porzellanerde) ist ein unverfestigtes, weißes Sedimentgestein (Verwitterungsprodukt des Feldspats) aus der großen Gruppe der Tone. Kaolin ist frei von Eisen. Der Ton mit hohem Kaolingehalt wird zur Herstellung des Metakaolins nach Zerkleinerung und thermischer Trocknung calciniert. Metakaolin enthält daher hohe Anteile reaktiver Kieselsäure und weist damit puzzolanische Eigenschaften auf.

Da kaolinitische Tone nicht in großen Mengen zur Verfügung stehen und Metakaolin preisintensiv ist, sind dem Einsatz im Beton als Betonzusatzstoff und bei der Zementherstellung enge Grenzen gesetzt.

Durch die Zugabe von Metakaolin mit hohem Anteil and SiO₂ und Al₂O₃ kann die Wasserstabilität des ausgehärteten Produktes, erhältlich aus der Umsetzung der ersten und der zweiten Komponente, stark erhöht werden.

### Rheologiemodifizierer

Die zweite Komponente kann zusätzlich einen Rheologiemodifizierer enthalten, welcher beispielsweise die Viskosität der zweiten Komponente und damit der erfindungsgemäßen Zweikomponenten-Zusammensetzung steuert.

Ein Beispiel hierfür ist Tafigel^{®} PUR 85.

### Netzmittel

Die zweite Komponente kann zusätzlich ein Netzmittel enthalten.

Ein Beispiel hierfür ist Metolat^{®} 388. Das Netzmittel führt zunächst dazu, dass man eine gleichmäßige Dispersion erreicht, aber zusätzlich wird durch die Zugabe eines Netzmittels sichergestellt, dass das organische Lösungsmittel, zum Öffnen der Mikrohohlkugeln ausreichend wasserlöslich ist.

### Zweikomponenten-Zusammensetzung

Die erfindungsgemäße Zweikomponenten-Zusammensetzung wird durch Inkontaktbringen der ersten und zweiten Komponente gebildet.

In einer bevorzugten Ausführungsform kann die Kombination der ersten Komponente und der zweiten Komponente in einem Verhältnis zwischen 10:1 und 1:1, bevorzugt zwischen 5:1 und 1:1, weiter bevorzugt zwischen 4:1 und 1:1, weiter bevorzugt zwischen 3:1 und 1:1, weiter bevorzugt zwischen 2:1 und 1:1, weiter bevorzugt bei ungefähr 2:1, liegen.

Das Verhältnis hangt von der gewünschten Reaktionszeit ab. Das Verhältnis hangt auch von dem verwendeten Bindemittel ab. Es hängt auch davon ab, welche Bestandteile in der ersten Komponente und der zweiten Komponente enthalten sind.

Die Geschwindigkeit der Reaktion der ersten und der zweiten Komponente kann durch Temperatur, Wasserzugabe und Viskositätseinstellung gesteuert werden.

Die Bestandteile der erfindungsgemäßen Zweikomponenten-Zusammensetzung, d.h. die Bestandteile der ersten und zweiten Komponente, werden vorzugsweise so ausgewählt, dass die folgenden Eigenschaften der Zweikomponenten-Zusammensetzung resultieren:

| | |
|---|---|
| Feststoff-Gehalt in Gew.-%: | vorzugweise mindestens 40 %, weiter bevorzugt mindestens 45 %, weiter bevorzugt mindestens 50 %, weiter bevorzugt mindestens 55 % |
| | |
| | vorzugweise höchstens 80 %, weiter bevorzugt höchstens 75 %, weiter bevorzugt höchstens 70 %, weiter bevorzugt höchstens 65 % |
| | |
| | vorzugweise 40 bis 80 %, weiter bevorzugt 45 bis 75 %, weiter bevorzugt 50 bis 70 %, weiter bevorzugt 55 bis 65 % |
| | |
| Wassergehalt in Gew.-%: | vorzugweise mindestens 20 %, weiter bevorzugt mindestens 25 %, weiter bevorzugt mindestens 30 %, weiter bevorzugt mindestens 35 % |
| | |
| | vorzugweise höchstens 60 %, weiter bevorzugt höchstens 55 %, weiter bevorzugt höchstens 50 %, weiter bevorzugt höchstens 45 % |
| | |
| | vorzugweise 20 bis 60 %, weiter bevorzugt 25 bis 55 %, weiter bevorzugt 30 bis 50 %, weiter bevorzugt 35 bis 45 % |
| | |
| organischer Anteil in Gew.-%: | vorzugweise mindestens 2 %, weiter bevorzugt mindestens 3 %, weiter bevorzugt mindestens 4 %, weiter bevorzugt mindestens 5 % |
| | |
| | vorzugweise höchstens 15 %, weiter bevorzugt höchstens 10 %, weiter bevorzugt höchstens 9 %, weiter bevorzugt höchstens 8 % |
| | |
| | vorzugweise 2 bis 15 %, weiter bevorzugt 3 bis 10 %, weiter bevorzugt 4 bis 9 %, weiter bevorzugt 5 bis 8 % |
| | |
| Anteil Mikrohohlkugeln in Gew.-%: | vorzugweise mindestens 0,5 %, weiter bevorzugt mindestens 1 %, weiter bevorzugt mindestens 1,5 %, weiter bevorzugt mindestens 2 % |
| | |
| | vorzugweise höchstens 10 %, weiter bevorzugt höchstens 8 %, weiter bevorzugt höchstens 6 %, weiter bevorzugt höchstens 5 % |
| | |
| | vorzugweise 0,5 bis 10 %, weiter bevorzugt 1 bis 8 %, weiter bevorzugt 1,5 bis 6 %, weiter bevorzugt 2 bis 5 % |
| | |
| Anteil Propylencarbonat in Gew.-%: | vorzugweise mindestens 0,5 %, weiter bevorzugt mindestens 0,75 %, weiter bevorzugt mindestens 1,0 %, weiter bevorzugt mindestens 1,5 % |
| | |
| | vorzugweise höchstens 10 %, weiter bevorzugt höchstens 8 %, weiter bevorzugt höchstens 6 %, weiter bevorzugt höchstens 5 % |
| | |
| | vorzugweise 0,5 bis 10 %, weiter bevorzugt 0,75 bis 8 %, weiter bevorzugt 1,0 bis 6 %, weiter bevorzugt 1,5 bis 5 % |

Erfindungsgemäß ist herauszustellen, dass die Zweikomponenten-Zusammensetzung einen geringen organischen Anteil aufweist. Durch Rezepturenanpassung kann der organischen Gesamtanteil (der erfindungsgemäßen Zweikomponenten-Zusammensetzung) auf die oben genannten Werte eingestellt werden. Dies kann die Brandklasseneinstufung positiv beeinflussen. Zudem werden auch die ökologischen Aspekte deutlich verbessert.

Die Viskosität und die Dichte der ersten und zweiten Komponente werden vorzugsweise auf die nachfolgenden Bereiche eingestellt

| | Viskosität | Dichte |
|---|---|---|
| Erste Komponente | vorzugsweise 50 bis 150 dPas, weiter bevorzugt 60 bis 130 dPas, weiter bevorzugt 70 bis 110 dPas, weiter bevorzugt 80 bis 100 dPas | vorzugsweise 1,20 bis 1,80 g/cm³, weiter bevorzugt 1,25 bis 1,75 g/cm³, weiter bevorzugt 1,30 bis 1,70 g/cm³, weiter bevorzugt 1,35 bis 1,65 g/cm³ |
| | | |
| Zweite Komponente | vorzugsweise 20 bis 100 dPas, weiter bevorzugt 25 bis 90 dPas, weiter bevorzugt 30 bis 80 dPas, weiter bevorzugt 35 bis 75dPas | vorzugsweise 0,90 bis 1,50 g/cm³, weiter bevorzugt 0,95 bis 1,45 g/cm³, weiter bevorzugt 1,00 bis 1,40 g/cm³, weiter bevorzugt 1,05 bis 1,35 g/cm³ |

Die Viskosität wird gemessen mit einem Viskosimeter HAAKE VT2plus, Spindel 2, 62,5RPM.

Die Viskosität kann durch Zugabe von Füllmitteln in den oben beschriebenen Bereich angepasst werden, dass sich die Komponenten gut noch gut durch eine Handpresse auspressen lassen. Gleichzeitig ist die Viskosität hoch genug, dass der resultierende Schaum auch bei Auftragung auf senkrechte Oberflächen noch eine gute Haftung an der Wand aufweist. Dies wird mit den obenstehenden Werten erreicht.

Die erfindungsgemäße Zweikomponenten-Zusammensetzung kann entweder in der ersten oder der zweiten Komponente noch weitere Bestandteile aufweisen.

### Weitere Bestandteile der erfindungsgemäßen Zweikomponenten-Zusammensetzung

Im Rahmen der vorliegenden Erfindung wurde überraschend herausgefunden, dass die Zusammensetzung des Verfahrensschritts (1) bzw. (1'), welche weitere Bestandteile aufweist vorteilhaft für das, nach dem erfindungsgemäßen Verfahren erhaltene Brandschutzmaterial, ist.

### Die Keramisierung der Zusammensetzung bei erhöhten Temperaturen unterstützender Bestandteil

Diese Bestandteile können dabei bereits während den Temperaturen des erfindungsgemäßen Verfahrens die Keramisierung des Brandschutzmaterials unterstützen und/oder diese Wirkung im Brandfall entfalten.

Ein Bestandteil, der die Keramisierung der Zusammensetzung bei erhöhten Temperaturen unterstützt, wird vorzugsweise ausgewählt aus der Gruppe, bestehend aus mineralischen Additiven, Aluminiumhydroxid, Filterstaub, Flugasche, keramischen Hohlkugeln, Glashohlkugeln, Schaumglasgranulat, Schiefermehl, Quarzmehl, Glimmer, Wollastonit, Calciumcarbonate, Kaolin, Vermiculit und Ettringit.

Insbesondere bevorzugt ist die Verwendung von Aluminiumhydroxid, Vermiculiten, Glashohlkugeln, keramischen Hohlkugeln und Calciumcarbonat, sowie Mischungen hiervon.

Der Gewichtsanteils dieses, die Keramisierung unterstützenden Bestandteils, beträgt, jeweils bezogen auf die Gesamtmasse der Zusammensetzung, im Allgemeinen 1 bis 15 Gew.-%, bevorzugt 3 bis 13 Gew.-%, weiter bevorzugt 6 bis 12 Gew.-%.

### Borax / Wasserglas / Borax-Härter

Ein weiterer bevorzugter Bestandteil der Zusammensetzung ist Dinatriumtetraborat-Decahydrat (Borax), wobei der Gehalt an Dinatriumtetraborat-Decahydrat, jeweils bezogen auf die Gesamtmasse der Zusammensetzung, im Allgemeinen 0,1 bis 10 Gew.-%, bevorzugt 0,25 bis 7,5 Gew.-%, weiter bevorzugt 0,5 bis 5,0 Gew.-%, beträgt
Die Zusammensetzung kann zusätzlich mindestens einen weiteren Bestandteil umfassen, welcher zu einem Aushärten und/oder Abbinden der Zusammensetzung führt.

Der weitere Bestandteil wird im Allgemeinen ausgewählt aus der Gruppe, bestehend aus phosphathaltigen Wasserglashärtern, Glyoxal, Triacetin, Ethylencarbonat und Propylencarbonat.

Der Gehalt eines Härters, jeweils bezogen auf die Gesamtmasse der Zusammensetzung, beträgt im Allgemeinen 0,5 bis 10 Gew.-%, bevorzugt 1,0 bis 7,5 Gew.-%, weiter bevorzugt 2,0 bis 5,0 Gew.-%.

### Hygroskopischer Bestandteil

Die Zusammensetzung kann zusätzlich mindestens einen weiteren Bestandteil umfassen, welcher eine feuchtigkeitszurückhaltende und/oder hygroskopische Eigenschaft aufweist. Durch den Zusatz eines entsprechenden Bestandteils kann die Restfeuchtigkeit des Brandschutzmaterials eingestellt und konstant gehalten werden.

Dieser weitere Bestandteil wird vorzugsweise ausgewählt aus der Gruppe, bestehend aus Glycerin, Bittersalz (Magnesiumsulfat), Calciumchlorid, Zeolithen und Zucker (auch in Form von Melasse). Vorteilhaft ist vor allem die Verwendung von Bittersalz, da der hohe Anteil an Kristallwasser besonders positive Eigenschaften auf die Kühlwirkung im Brandfall hat.

### Sonstige weitere Bestandteile

Darüber hinaus kann die Zusammensetzung zusätzlich mindestens eine Kieselsäure umfassen.

Auch weitere, für aufblähende Zusammensetzungen übliche Bestandteile können in der Zusammensetzung enthalten sein.

Die Zusammensetzung weist dabei einen Gehalt an Wasser von im Allgemeinen 15 bis 65 Gew.-%, bevorzugt 20 bis 55 Gew.-%, besonders bevorzugt 25 bis 50 Gew.-%; jeweils bezogen auf die Gesamtmasse der Zusammensetzung, auf. Dieser Gehalt an Wasser in der Zusammensetzung kann durch die spezielle Auswahl der einzelnen Bestandteile oder durch die Zugabe von Wasser realisiert werden.

Durch die Zugabe von weiterem Wasser ist es auch möglich, höhere Gehalte an Wasser zu erzielen, beispielsweise von bis zu 95 Gew.-%

Der Wassergehalt der Zusammensetzung kann durch die Zugabe von Substanzen mit einem hohen Kristallwassergehalt wie beispielsweise Ettringit erhöht werden. Auch kann durch die Zugabe von Substanzen mit einem hohen Dampfdruck wie beispielsweise Glycerin das Austrocknen der Masse verringert oder verhindert werden. Die Zugabe solcher Substanzen fördert auch den Restfeuchtegehalt des Brandschutzmaterials.

Darüber hinaus umfasst die erfindungsgemäße Zweikomponenten-Zusammensetzung vorzugsweise keine Base, was den positiven Effekt hat, dass der pH-Wert deutlich verträglicher ist.

Insbesondere sind Basen in der erfindungsgemäßen Zusammensetzung ausgeschlossen, die ausgewählt werden aus der Gruppe, bestehend aus Natriumhydroxid und Kaliumhydroxid.

### Verwendung der erfindungsgemäßen Zweikomponenten-Zusammensetzung

Die erfindungsgemäße Zweikomponenten-Zusammensetzung kann als Bauschaum und Brandschutzschaum und zur Herstellung von Brandschutzmaterialien verwendet werden.

Bauschaum, welcher synonym auch als Montageschaum, Isolierschaum, Füllschaum oder Dämmschaum bezeichnet wird, ist im Sinne der vorliegenden Erfindung ein Ortschaum, der im Bauwesen zur Abdichtung, zum Kleben und zum Dämmen verwendet wird. Man spricht dabei von einem "Ausschäumen". Bauschäume aus dem Stand der Technik basieren normalerweise auf Polyurethan und werden dann auch als PU-Schaum und PUR-Schaum bezeichnet. Entsprechende Bauschäume werden als Einkomponenten-Schaum (1K) oder auch als Zweikomponenten-Variante (2K) verwendet.

Brandschutzschaum im Sinne der vorliegenden Erfindung ist ein feuerhemmendes Material, das verwendet wird, um die Ausbreitung von Feuer und Rauch zu verlangsamen oder zu verhindern. Es besteht in der Regel aus expandierenden Polymeren, die sich bei Erhitzung ausdehnen und dadurch eine isolierende Barriere bilden. In der Industrie und im Handwerk wird feuerbeständiger Brandschutzschaum häufig zur Abschottung von Kabel- und Rohrdurchführungen, zum Schutz von Stahlträgern oder zur Auskleidung von Wänden und Decken eingesetzt. Im Gewerbe findet er Anwendung in der Elektrotechnik, im Maschinenbau, in der Automobilindustrie sowie im Hoch- und Tiefbau.

Brandschutzmaterialien im Sinne der vorliegenden Erfindung meint hierbei Materialien, die (weitestgehend) nicht brennbar sind, temperaturisolierend bzw. wärmedämmend wirken und damit Hitze- bzw. Flammenschutz gewähren, sowie gegebenenfalls, beispielsweise durch Freisetzung von Wasser, sogar zur Unterbindung von Feuern beitragen können.

Die Gasundurchlässigkeit von Brandschutzmaterialien kann, in spezifischen Situationen, erwünscht sein, da diese einerseits die Zufuhr von Sauerstoff zum Brandherd unterbindet und andererseits den Austritt potentiell gefährlicher Verbrennungsgase unterdrückt.

Um eine bessere Verarbeitung bzw. Anwendung zu ermöglichen, besitzen Brandschutzmaterialien im Allgemeinen neben ihrer Gestaltfestigkeit, welche sie bevorzugt auch bei erhöhten Temperaturen beibehalten, bevorzugt eine geringe Dichte, sowie eine gewisse Härte. Die Gestaltfestigkeit, auch bei erhöhten Temperaturen, ermöglicht den Brandschutz spezifischer, ausgewählter Bereiche. Die geringe Dichte vereinfacht den Transport, sowie die Befestigung dieser Materialien an den gewünschten Positionen (beispielsweise an Objekten). Die geringe Dichte der Brandschutzmaterialien bewirkt außerdem eine geringe Gesamtgewichtszunahme eines Objekts nach Anbringung des Brandschutzmaterials. Die Härte der Brandschutzmaterialien erleichtert die Verarbeitung (beispielsweise das Zurechtschneiden in Formen gewünschter Größe und Gestalt), den Transport, die Lagerung und die Anbringung an Objekten. Neben dem nachträglichen Zurechtschneiden von Brandschutzmaterialien ist die direkte Herstellung der Brandschutzmaterialien in den gewünschten Formen auch von Interesse, da hierdurch der anschließende Arbeitsschritt des Zurechtschneidens entfällt.

Zurechtschneiden im Sinne der Erfindung meint dabei jegliche Form der Bearbeitung, wie beispielsweise Fräsen, Schneiden, Ätzen oder andere dem Fachmann geläufige Verfahren um ein Brandschutzmaterial der gewünschten Größe und Gestalt zu erhalten.

Auf Grund der unterschiedlichsten Anwendungsgebiete der Brandschutzmaterialien, wie beispielsweise im Freien, ist eine hohe Stabilität gegenüber den am Einsatzort vorherrschenden Umweltbedingungen, wie beispielsweise Temperaturschwankungen, direkte Sonneneinstrahlung, Windeinwirkung, Wassereinwirkung bzw. Feuchtigkeit, dieser Materialien essentiell. Die Anforderungen an Brandschutzmaterialien sind dabei, je nach Anwendungsort, unterschiedlich und können daher hiervon abweichen.

Entsprechende Materialien finden in diversen Industriezweigen, wie beispielsweise der Bauindustrie und hierbei insbesondere im vorbeugenden, baulichen Brandschutz Verwendung. Aber auch außerhalb des Brandschutzes besitzen Brandschutzmaterialien, insbesondere auf Grund ihrer temperaturisolierenden Eigenschaften, ein potentiell breites Einsatzgebiet. Die Einsatzbereiche von Brandschutzmaterialien und Materialien zur Wärmeisolation überlappt auf Grund Ihrer sehr ähnlichen Anforderungsprofile oftmals.

Als Anwendungsbereiche mit (hohen) Temperaturdifferenzen (außerhalb eines Brandfalls), für die auch Brandschutzmaterialien verwendet werden können, sollen hier die Metallurgie bzw. die metallverarbeitende Industrie im Allgemeinen, sowie die Wärmeisolation von Öfen im speziellen, dienen. Auch die "gewöhnliche" Wärmedämmung von Gebäuden, wie beispielsweise von Häusern, bei gleichzeitiger Beibehaltung der genannten Brandschutzeigenschaften durch Brandschutzmaterialien ist denkbar. Weitere Einsatzgebiete sind für den Fachmann offensichtlich.

Die Entwicklung von verbesserten Brandschutzmaterialien wird dabei sowohl durch gesetzliche Vorgaben als auch durch die üblichen Marktmechanismen vorangetrieben und beeinflusst. Daher sollte die Herstellung der Brandschutzmaterialien, welche die genannten Eigenschaften besitzen, möglichst kostengünstig, energiearm und einfach erfolgen. Auch eine möglichst individuell einstellbare Gestalt der Brandschutzmaterialien bzw. eine leichte Bearbeitung zum Erhalt der gewünschten Gestalt sollte gegeben sein. Außerdem sollten bevorzugt unbedenkliche, leicht zugängliche und preiswerte Ausgangsmaterialien verwendet werden können.

Der Begriff "aufschäumen" beziehungsweise "aufblähend" - so wie er im Rahmen der vorliegenden Erfindung verwendet wird - bezeichnet die Wirkungsweise besonderer Materialien, die aufgebläht werden können und dadurch einen isolierenden Körper bilden. Eine feine, gleichmäßige Struktur dieser Blähmasse ist dabei von besonderem Interesse, um eine uniforme und hohe Schutzwirkung über den gesamten Bereich der Blähmasse zu erhalten. Jegliche Art von Rissen sowie größere Hohlräume sind unerwünscht. Des Weiteren ist eine Volumenzunahme nötig, da bei Ausbleiben dieser bzw. bei lediglich minimaler Zunahme die erhaltenen Körper eine i. d. R. unzulässig hohe Dichte aufweisen. Dementsprechend bedeutet im Rahmen der vorliegenden Erfindung eine "schlechte Blähschicht" bzw. ein "schlechtes Blähverhalten", dass die Volumenzunahme nicht ausreichend war und / oder die Struktur des Blähkörpers keine feine, gleichmäßige Struktur aufweist.

Die Wasserbeständigkeit und die Struktur der erhaltenen Brandschutzmaterialien der vorliegenden Erfindung sind optimiert und das Blähverhalten der beanspruchten Zusammensetzungen ist optimal.

Der im Rahmen dieser Erfindung verwendete Ausdruck "festes Brandschutzmaterial" meint dabei, wie auch anhand des Verwendungszwecks als Brandschutzplatte deutlich wird, ein festes Material. Dieses Material ist dabei vorzugsweise nicht pulverig, wobei das Vorhandensein von wenigen pulverigen Resten am ansonsten nicht pulverigen und festen Brandschutzmaterial als festes Material zu verstehen ist.

Die Farbe des Brandschutzmaterials, welches mit dem erfindungsgemäßen Verfahren hergestellt wird, ist vorzugsweise weiß.

Die Verwendung der erfindungsgemäßen Zweikomponenten-Zusammensetzung erfolgt, wie bereits ausgeführt, durch das Inkontaktbringen der zwei Komponenten, wobei das Lösemittel der zweiten Komponente die Mikrohohlkugeln der ersten Komponenten aufspalten.

Das Aufbrechen der Mikrokapseln mit einem Mittel ist, im Vergleich zum Aufblähen durch Energiezufuhr, eine energiesparsamere Methode. Dadurch eröffnet dieses Vorgehen die Verwendung von niedrigeren Verfahrenstemperaturen, beispielsweise von Raumtemperatur, als bei der Aufblähung durch Energiezufuhr.

Das Aufbrechen der Mikrokapseln mit einem Mittel kann hierbei auf verschiedenste Weise erfolgen. Denkbar sind beispielsweise eine chemische Reaktion zwischen dem Mittel und der Mikrokapsel, die in der Gasfreisetzung resultiert oder eine physikalische Wechselwirkung zwischen dem Mittel und der Mikrokapsel, wodurch beispielsweise das Aufquellen der Kapseln und damit die Freisetzung des Treibgases erfolgt. Selbstverständlich sind weitere Wechselwirkungen zum Aufbrechen der Mikrokapseln möglich und auch ein Zusammenspiel von verschiedenen Wechselwirkungen ist nicht ausgeschlossen.

Vorzugsweise beginnt die Gasfreisetzung nach Zugabe des Mittels in einem Zeitraum von zwischen 20 Sekunden bis 20 Minuten, weiter bevorzugt zwischen 20 Sekunden bis 10 Minuten, weiter bevorzugt zwischen 30 Sekunden bis 5 Minuten, weiter bevorzugt zwischen 1 Minute bis 3 Minuten.

Das resultierende Brandschutzmaterial ist im Wesentlichen formstabil.

Es weist im Allgemeinen eine Dichte von weniger als 0,6 g/cm³, bevorzugt weniger als 0,5 g/cm³, besonders bevorzugt weniger als 0,4 g/cm³, auf.

Werden die erste und zweite Komponente in einer spezifischen Form bereitgestellt und unterläuft anschließend das Inkontaktbringen, so lassen sich die erhaltenen Brandschutzmaterialien vorzugsweise problemlos und im Wesentlichen Rückstandslos sowie formstabil aus dieser Form nach Erhärtung entfernen. Die verwendete Form kann anschließend ohne aufwendige Reinigung wiederverwendet werden.

Im Gegensatz zur problemlosen Entfernung der Brandschutzmaterialien aus den spezifischen Formen steht die Herstellung von Verbundmaterialien. Hierbei stehen während dem Inkontaktbringen die beiden Komponenten mit Trägermaterialien in Kontakt bzw. kontaktieren diese Trägermaterialien nach der Blähung. Nach der Blähung bilden das Brandschutzmaterial und das Trägermaterialien dabei ein festes Verbundmaterial (bzw. einen Verbundkörper). Die Zusammensetzung weist also ausreichende Klebeeigenschaften auf, so dass bei der Herstellung von Verbundmaterialien vorzugsweise keine zusätzlichen Klebmaterialien verwendet werden müssen. Dieser Aspekt wird im Abschnitt über die Herstellung von Verbundmaterialien weiter behandelt.

### Verwendung der Brandschutzmaterialien

Die nach dem erfindungsgemäßen Verfahren erhaltenen Brandschutzmaterialien finden beispielsweise Verwendung in der Bauindustrie, wie beispielsweise in der Auskleidung und/oder Verkleidung von Türen, Wänden, Böden und Decken, für Durchbrüchen, Durchführungen und sonstigen Öffnungen. Neben dem Gebäudebau, sowie beispielsweise in der Auskleidung von Tunneln und Rohren, können die Brandschutzmaterialien auch im Schiffs- und Fahrzeugbau, wie beispielsweise bei Waggons oder im Transportwesen, wie beispielsweise bei Containern verwendet werden. Auch der Schutz von Kabeln und sonstiger Elektronik, sowie die Verwendung bei persönlicher Schutzkleidung sind möglich.

Die erfindungsgemäßen Brandschutzmaterialien können beispielsweise zum Schutz von einer "Black Box", oder ähnlich sensitiver Elektronik, verwendet werden. Bei einer Black Box handelt es sich um Computer, die beispielsweise in bemannten und/oder unbemannten Luft- , Land- und Wasserfahrzeugen eingesetzt werden. Beispiele für Luftfahrzeuge sind Flugzeuge und Helikopter. Beispiele für Landfahrzeuge sind Züge und Autos. Beispiele für Wasserfahrzeuge sind Schiffe, Boote und U-Boote. Die Black Box zeichnet während des Betriebs diverse Parameter, wie beispielsweise die Geschwindigkeit und die Position des Fahrzeugs auf, kann aber auch dazu dienen weitere Parameter, beispielsweise Geräusche, wie Gespräche, aufzuzeichnen. Bei Bedarf können die aufgezeichneten Daten ausgelesen werden. Dies ist insbesondere bei Unfällen, beispielsweise einem Flugzeugabsturz, und/oder bei Beinahunfällen von Interesse um den Unfallhergang und/oder die Unfallursache mittels der aufgezeichneten Daten zu rekonstruieren.

Da insbesondere bei Unfällen oftmals extreme Bedingungen herrschen, muss die Black Box gegen solche Bedingungen geschützt werden. Aus ökonomischen Gesichtspunkten sollte dieser Schutz möglichst platzsparend sein und eine geringe Dichte aufweisen. Die extremen Bedingungen umfassen beispielsweise hohe thermische Energien, beispielsweise durch einen Brand, und hohe kinetische Energien, wie bei einem Aufprall mit hoher Geschwindigkeit. Die Black Box muss eventuell auch gegen diverse Chemikalien geschützt werden, die, insbesondere durch einen Unfall, die Elektronik der Black Box kontaktieren und die gespeicherten Daten kompromittieren können, sodass die Daten nicht bzw. nur teilweise ausgelesen werden können. Solche Chemikalien umfassen beispielsweise Wasser, welches beispielsweise durch Löschung eines Brandes oder durch Leckage eines Wasserfahrzeugs die Black Box kontaktiert, aber auch andere Chemikalien, beispielsweise sonstige in der Brandbekämpfung einsetzbare Chemikalien, bzw. Chemikalien die, beispielsweise durch die hohen thermischen Energien eines Feuers, freigesetzt werden.

### Verbundmaterialien

Das durch das erfindungsgemäße Verfahren hergestellte Brandschutzmaterial ausgehend von der ersten und zweiten Komponente kann in Form von Verbundmaterialien Verwendung finden. Verbundmaterial, umfassen ein solches Brandschutzmaterial und mindestens ein Trägermaterial.

Die ausgehend von der ersten und zweiten Komponente erhaltene Zusammensetzung weist nicht nur aufblähende Eigenschaften, sondern auch Klebeeigenschaften auf. Die Zusammensetzung eignet sich daher insbesondere auch zur Verklebung von Materialien.

Demgemäß betrifft die vorliegende Erfindung auch Verbundmaterialien, umfassend eine Zusammensetzung eines Brandschutzmaterials ausgehend von der ersten und zweiten Komponente und mindestens ein Trägermaterial, wobei die Zusammensetzung entweder auf dem Trägermaterial aufgetragen oder das Trägermaterial mit dieser Zusammensetzung imprägniert wird.

Das Trägermaterial ist dabei ausgewählt aus der Gruppe, bestehend aus Vliesmaterialien, insbesondere Vliesmaterialien aus Glasfasern, Polyester, Naturfasern, Zellwolle/Zellstoff oder Polyamid; Gewebe aus Glasfasern oder Mischgewebe; Gittergelege aus Glasfasern; Mineralwolle, insbesondere Mineralwolle aus Glas oder Stein; Zellulosematerialien wie Papiermaterialien und Pappmaterialien, insbesondere Papierwaben, Holzfaserplatten oder Wabenkonstruktionen; Kunststoffmaterialien; Metallmaterialien, wie Metallfolien und -bleche, insbesondere Aluminiumfolien und -bleche oder Edelstahlfolien und -bleche; Glasmaterialien, wie Glasfolien und Glaswolle; Baumwollgeweben; Holzmaterialien und Holzwerkstoffplatten wie MDF-, HDF- und Spanplatten; Schäume aus Polyurethan, Polystyrol, Glas- oder Steinschaum, PVC oder Phenol; Materialien aus extrudiertem Polystyrol-Schaum; Materialien aus Polyethylen-Schaum, Polypropylen-Schaum, Polyurethan-Schaum und Polypropylen-Schaum; Folien aus Polypropylen, Polyethylen, Polyurethan oder Silicon und allgemeine Dekoroberflächen wie HPL oder CPL. Weitere geeignete Materialien sind Materialien aus Flachs-, Jute-, Hanf- und Cellulosefasern sowie ganz allgemein Textilmaterialien.

Es ist hierbei bevorzugt ausgewählt aus der Gruppe bestehend aus: Vliesmaterialien; Papiermaterialien und Pappmaterialien, wie Papierwaben; Kunststoffmaterialien; Metallmaterialien, wie Metallfolien, insbesondere Aluminiumfolien; Glasmaterialien, wie Glasfolien und Glaswolle; Baumwollgeweben; Holzmaterialien; Mineralwolle; Materialien aus extrudiertem Polystyrol-Schaum, Polyurethan-Schaum, Polyethylen-Schaum und Polypropylen-Schaum; Materialien aus Jute-, Flachs-, Hanf- und Cellulosefasern; und Textilmaterialien.

Ebenso ist es möglich Verbundaufbauten aus beispielsweise Glasgewebe/Aluminium oder HPL/Glasvlies) als Trägermaterial zu verwenden.

Darüber hinaus können die Trägermaterialien für bestimmte Einsatzgebiete perforiert, geschlitzt oder auf andere Weisen strukturiert werden.

Im Rahmen der vorliegenden Erfindung kann das Trägermaterial mit der aufblähenden Zusammensetzung imprägniert werden und anschließend gemäß Verfahrensschritt (2) bzw. (2`) die Zusammensetzung in das Brandschutzmaterial umgewandelt werden. Ein Imprägnieren des Trägermaterials ist durch die Verwendung eines Tauchbades, welches mit der Zusammensetzung gefüllt ist, und ein Eintauchen des Trägermaterials in das Tauchbad möglich.

Ein Imprägnieren entsprechender Trägermaterialien, insbesondere von Papier- oder Pappmaterialien, wie Papier- oder Pappwaben, führt zu einem Eindringen der Zusammensetzung zwischen die Fasern des Trägermaterials, so dass auch ein Schneiden entsprechend imprägnierter Trägermaterialien nicht zu einem Verlust der Brandschutzwirkung führt. Ein Imprägnieren der Zusammensetzung in entsprechende Trägermaterialien kann darüber hinaus durch die Verwendung von oberflächenaktiven Mitteln verbessert werden. Verfahrensschritt (2) bzw. (2`) kann hierbei vor, oder auch nach dem Schneiden der imprägnierten Materialien erfolgen.

Werden Papierwaben mit der Zusammensetzung imprägniert, so erhält man, nach Anwendung des Verfahrensschritts (2) bzw. (2`) nicht brennbare Verbundmaterialien, aus denen beispielsweise Wände-, Decken- oder auch andere Bauelemente gefertigt werden können.

Die Brandschutzwirkung dieser Verbundmaterialien kann durch nachfolgende Maßnahmen noch weiter gesteigert werden:
1. Das für die Papierwaben eingesetzte Papier wird zuvor perforiert. Hierdurch wird der prozentuale Anteil an brennbarem Material reduziert und die Zusammensetzung wird besser aufgenommen. Des Weiteren lagert sich die Zusammensetzung auch in die perforierten Hohlräume ein, wodurch ihr Anteil erhöht wird.
2. Als Deckschichten für die Papierwaben wird mit Zusammensetzung imprägniertes Glas-, Papier- oder auch Kunststoffvlies verwendet. Durch diese Deckschichten wird einerseits die mechanische Stabilität der Papierwaben erhöht und zum anderen die Brandschutzwirkung. Die Menge der aufgebrachten Brandschutzmasse kann je nach Erfordernis variiert werden.
3. Anschließend erfolgt der erfindungsgemäße Verfahrensschritt (2) bzw. (2`).

Statt Vlies können auch Deckschichten aus perforiertem und mit Brandschutzmasse perforiertem Papier eingesetzt werden.

Ferner können die so hergestellten Deckschichten zusätzlich auch mit Aluminiumfolie versehen werden, was die Wärmereflektion verbessert, und die Wasserdampfdiffusion mindert.

### Sandwich-Struktur

Weiterer Gegenstand der vorliegenden Erfindung ist ein Verbundkörper, umfassend ein Trägermaterial gemäß der obenstehenden Definition, welches mit der Zusammensetzung aus Brandschutzmaterial ausgehend von der ersten und zweiten Komponente versehen wurde, und mindestens eine weitere Schicht, welche durch eine Aluminiumfolie, ein Glasvlies oder ein Papier- oder Pappmaterial gebildet wird und welche auf dem Trägermaterial aufgebracht ist.

Das Trägermaterial kann vorzugsweise eine Papier- oder eine Pappwabe sein.

Die weitere Schicht kann beispielsweise durch ein perforiertes Papiervlies oder ein perforiertes Pappmaterial oder Glasvlies gebildet werden.

Diese durch ein perforiertes Papiervlies oder ein perforiertes Pappmaterial gebildete weitere Schicht kann ferner vorzugsweise mit der Zusammensetzung imprägniert sein.

Nach Bereitstellung einer solchen Sandwichstruktur wird ein Brandschutzmaterial erhalten, welches den oben beschriebenen Aufbau besitzt. Verbundkörper mit einem solchen Aufbau werden im Rahmen der vorliegenden Erfindung auch als Sandwichstrukturen bezeichnet.

Diese Sandwichstrukturen weisen nicht nur hervorragende brandhemmende Eigenschaften auf, sondern sind aufgrund der Klebeeigenschaften der Zusammensetzung ausreichend stark verbunden, ohne dass ein zusätzlicher Klebstoff verwendet wird.

Insbesondere bei der Verwendung von Pappwaben als zweite Schicht wird durch die Abdeckung der Pappwaben mit, dem, durch das erfindungsgemäße Verfahren hergestellten Brandschutzmaterial, der Wärmedurchgang durch Konvektion verhindert und gleichzeitig (beispielsweise im Brandfall) durch Verdampfung des Wassers aus der Brandschutzmasse eine kühlende Wirkung erzielt.

Im Brandfall bleiben die resultierenden Sandwichstrukturen intakt und es kommt nicht zu einer Abspaltung einzelner Schichten aus dem Sandwich.

Erfindungsgemäße Sandwichstrukturen umfassen folgenden Aufbau:
(1) eine erste Schicht aus einer Aluminiumfolie, einem Glasvlies, einem Papier- oder Pappmaterial oder einem Verbund davon;
(2) eine zweite Schicht aus Vliesmaterial; Papiermaterial oder Pappmaterial, wie eine Papierwabe; Kunststoffmaterial; Metallmaterial, wie eine Metallfolien, insbesondere eine Aluminiumfolien; Glasmaterial, wie eine Glasfolie oder Glaswolle; Baumwollmaterial, Holzmaterial oder Mineralwollmaterial; Materialien aus Polyethylen-Schaum; Materialien aus extrudiertem Polystyrol-Schaum; Materialien aus Polyurethan-Schaum; Materialien aus Polypropylen-Schaum; Materialien aus Flachs, Jute, Hanf und Cellulose;
(3) eine dritte Schicht aus einer Aluminiumfolie, einem Glasvlies, einem Papier- oder Pappmaterial oder einem Verbund davon;
wobei das Verbundmaterial dergestalt aufgebaut ist, dass die erste Schicht auf einer Seite der zweiten Schicht vorgesehen ist und die dritte Schicht auf der anderen Seite der zweiten Schicht vorgesehen ist und das Brandschutzmaterial aus der Zusammensetzung gemäß dem erfindungsgemäßen Verfahren auf einer Seite oder auf beiden Seiten aufgebracht wurde.

Die erfindungsgemäße Zweikomponenten-Zusammensetzung wird vorzugsweise in einer Kartusche mit zwei getrennten Kompartments verwendet, wobei die erste Komponente in dem ersten Kompartment und die zweite Komponente in dem zweiten Kompartment vorliegt.

Eine Zweikomponenten-Kartusche ist ein innovatives Verpackungssystem, das speziell für Produkte entwickelt wurde, die aus zwei separaten Komponenten bestehen, die bei der Anwendung miteinander reagieren und aushärten. Diese Art von Kartusche wird häufig in der Bau- und Reparaturindustrie, in der Automobilbranche sowie in der Kunst- und Handwerkswelt eingesetzt.

Die Kartusche besteht in der Regel aus robustem Kunststoff, der eine sichere Lagerung und Handhabung der beiden Komponenten gewährleistet. Die Kartusche ist in zwei Kompartments unterteilt, die jeweils eine der Komponenten enthalten. Die beinden Kompartments sind vorzugsweise koaxial angeordnet.

Bei der Anwendung wird die Kartusche in eine geeignete Kartuschenpistole eingesetzt. Durch Drücken des Abzugs wird ein bestimmter Druck auf die Kartusche ausgeübt, wodurch beide Komponenten gleichzeitig durch die Mischdüse gepresst werden. Sobald die Komponenten gemischt sind, beginnt eine chemische Reaktion des Lösemittels mit dem Mikrohohlkugeln, die zur Aushärtung führt. Die Aushärtungszeit wird bereits vorstehend beschrieben.

Die Kartusche ermöglicht eine exakte Dosierung der beiden Komponenten, was zu einer konsistenten Qualität des Endprodukts führt.

Da die Komponenten getrennt gelagert werden, bleibt die Haltbarkeit der Materialien länger erhalten, ohne dass sie vorzeitig reagieren.

Die Verwendung einer Kartuschenpistole macht die Anwendung einfach und sauber, ohne dass zusätzliche Mischwerkzeuge

Die Mischung der zwei Komponenten in der Zweikomponenten-Kartusche erfolgt durch einen speziellen Mischmechanismus, der in der Mischdüse integriert ist. Die Mischdüse ist ein entscheidendes Element, das dafür sorgt, dass die beiden Komponenten in einem bestimmten Verhältnis gemischt werden. In der Düse gibt es spezielle Strömungswege oder Mischelemente, die eine gründliche Vermischung der beiden Komponenten gewährleisten.

Durch diesen Prozess wird sichergestellt, dass die beiden Komponenten optimal miteinander reagieren, was zu einer hohen Qualität und Festigkeit des Endprodukts führt.

### Ausführungsbeispiel

Die vorliegende Erfindung wird anhand des nachfolgenden Ausführungsbeispiel näher erläutert.

Es wird eine Zweikomponenten-Zusammensetzung aus den nachfolgenden Bestandteilen der ersten und zweiten Komponente hergestellt. Beide Komponenten werden separat in einer Kartusche mit zwei Kompartments bereitgestellt:

### Rezeptur: Mischungsverhältnis (Massenverhältnis in %)

### Erste Komponente

| | |
|---|---|
| Betol 52 (NaWG 50/52) | 23,49% |
| Betol 39 (NaWG 39T) | 41,12% |
| Expancel 031 DUX 40 | 4,67% |
| Silica-Faser 3mm Schnitt | 0,59% |
| Speswhite | 14,67% |
| Kaolin T 207 | 15,46% |
| Masse gesamt: | 100,00% |

### Zweite Komponente

| | |
|---|---|
| Wasser | 40,00% |
| Tafigel pur 85 | 3,78% |
| Metolat 338 | 1,57% |
| Propylencarbonat S | 9,13% |
| Tempozz M 88 | 9,45% |
| Speswhite | 36,06% |
| **Masse gesamt:** | 100,00% |

Die erste und zweite Komponenten werden in einer Kartusche mit zwei Kompartments bereitgestellt und aus der Kartusche aufgeschäumt, wobei das Mischungsverhältnis 2:1 beträgt.

Das aufgeschäumte Produkt weist folgende Eigenschaft auf:

### Gehälter Bestandteile:

| | |
|---|---|
| Feststoff-Gehalt in %: | 59,89 |
| Wassergehalt in % : | 40,11 |
| organischer Anteil in %: | 6,73 |
| Expancel_Anteil in %: | 3,29 |
| Propylencarbonat in %: | 2,69 |

### Dichte und Viskosität

| | Viskositätsmessung Charge 1 | Viskositätsmessung Charge 2 | Dichtemessung Charge 1 | Dichtemessung Charge 2 |
|---|---|---|---|---|
| Komponente A | 94 dPas | 92 dPas | 1,50 g/cm³ | 1,53 g/cm³ |
| Komponente B | 47 dPas | 60 dPas | 1,24 g/cm³ | 1,18 g/cm³ |

## Patentansprüche

1. Zweikomponenten-Zusammensetzung, enthaltend
(1)eine erste Komponente, umfassend mindestens ein Wasserglas und mit Treibgas versehene Mikrohohlkugeln mit einem mit Treibgas versehenen Kern und einem Polymermaterial als Hülle; und
(2) eine zweite Komponente, umfassend ein organisches Lösemittel zum Öffnen dieser Mikrohohlkugeln,
**dadurch gekennzeichnet, dass** die erste Komponente Silikatfasern enthält.

2. Zweikomponenten-Zusammensetzung, enthaltend
(1) eine erste Komponente, umfassend mindestens ein Wasserglas und mit Treibgas versehene Mikrohohlkugeln mit einem mit Treibgas versehenen Kern und einem Polymermaterial als Hülle; und
(2) eine zweite Komponente, umfassend ein organisches Lösemittel zum Öffnen dieser Mikrohohlkugeln,
**dadurch gekennzeichnet, dass** die Zweikomponenten-Zusammensetzung ein Metakaolin enthält.

3. Zweikomponenten-Zusammensetzung nach Anspruch 2, **dadurch gekennzeichnet, dass** die erste Komponente Silikatfasern enthält.

4. Zweikomponenten-Zusammensetzung nach einem der Ansprüche 1 bis 3, **dadurch gekennzeichnet, dass** die Silikatfasern in der ersten Komponente in einer Menge von 0,1 bis 10 Gew.-%, bevorzugt 0,1 bis 8 Gew.-%, weiter bevorzugt 0,2 bis 6 Gew.-%, weiter bevorzugt 0,2 bis 4 Ge.-%, weiter bevorzugt 0,3 bis 2 Gew.-%, weiter bevorzugt 0,3 bis 1 Gew.-%, weiter bevorzugt 0,4 bis 0,8 Gew.-%, weiter bevorzugt 0,5 bis 0,7 Gew.-%, jeweils bezogen auf das Gesamtgewicht der ersten Komponente, enthalten sind.

5. Zweikomponenten-Zusammensetzung nach einem der Ansprüche 1 bis 4, **dadurch gekennzeichnet, dass** die Silikatfasern eine mittlere Faserlänge von 0,5 bis 7 mm, bevorzugt 1 bis 6 mm, weiter bevorzugt 1,5 bis 5 mm, weiter bevorzugt 2 bis 4 mm, weiter bevorzugt 2,5 bis 3,5 mm, aufweisen.

6. Zweikomponenten-Zusammensetzung nach einem der Ansprüche 1 bis 5, **dadurch gekennzeichnet, dass** die erste Komponente mindestens zwei unterschiedliche Wassergläser enthält.

7. Zweikomponenten-Zusammensetzung nach einem der Ansprüche 1 bis 6, **dadurch gekennzeichnet, dass** die erste Komponente mindestens zwei unterschiedliche Natriumwassergläser enthält.

8. Zweikomponenten-Zusammensetzung nach einem der Ansprüche 1 bis 7, **dadurch gekennzeichnet, dass** die erste Komponente kein Kaliumwasserglas enthält.

9. Zweikomponenten-Zusammensetzung nach einem der Ansprüche 1 bis 8, **dadurch gekennzeichnet, dass** der Anteil an organischen Bestandteilen in der ersten und zweiten Komponente höchstens 15 Gew.-%, weiter bevorzugt höchstens 10 Gew.-%, weiter bevorzugt höchstens 9 Gew.-%, weiter bevorzugt höchstens 8 Gew.-%, jeweils bezogen auf das Gesamtgewicht der ersten und zweiten Komponente, beträgt.

10. Zweikomponenten-Zusammensetzung nach einem der Ansprüche 1 bis 9, **dadurch gekennzeichnet, dass** die Volumenzunahme von Flüssigkeit zu Schaum beim Inkontaktbringen der ersten und zweiten Komponente als Faktor 1,5 bis 8, weiter bevorzugt 2 bis 6, weiter bevorzugt 2,5 bis 5, beträgt.

11. Zweikomponenten-Zusammensetzung nach einem der Ansprüche 1 oder 3 bis 10, **dadurch gekennzeichnet, dass** die Zweikomponenten-Zusammensetzung ein Metakaolin enthält,

12. Kartusche, umfassend mindestens zwei Kompartments, wobei das erste Kompartment eine erste Komponente und das zweite Kompartment eine zweite Komponente enthält, **dadurch gekennzeichnet, dass** die erste und zweite Komponente gemäß einem der Ansprüche 1 bis 11 ausgebildet ist.

13. Verwendung der Zweikomponenten-Zusammensetzung gemäß einem der Ansprüche 1 bis 11 oder der Kartusche gemäß Anspruch 12 als Bauschaum oder Brandschutzschaum.

14. Verwendung der Zweikomponenten-Zusammensetzung gemäß einem der Ansprüche 1 bis 11 oder der Kartusche gemäß Anspruch 13 zur Herstellung von Brandschutzmaterialien.
